# EUROPEAN PATENT SPECIFICATION

(11) **EP 1 686 744 B1**
(45) Date of publication and mention of the grant of the patent: **16.07.2008**
(21) Application number: 06250424.6
(22) Date of filing: 26.01.2006
(51) Int. Cl.: H04L 12/56, H04Q 7/38

(54) **Method of allocating channel time period for peer to-peer communication between devices in wireless universal serial bus communication**
Verfahren zur Zuweisung von Kanalzeitperioden für Punkt-zu-Punkt Kommunikation zwischen Geräten in einer drahtlosen "Universal Serial Bus" (WUSB) Kommunikation
Procédé d'allocation d'une période de temps sur un canal pour la communication point à point entre dispositifs communiquant à travers un bus série universel sans fil

(30) Priority: 31.01.2005 KR 2005008755
(43) Date of publication of application: 02.08.2006
(73) Proprietor: Samsung Electronics Co., Ltd., Suwon-si, Gyeonggi-Do (KR)
(72) Inventor: Hong, Jin-woo, 104-702 Hwanggol Maeul 1-danji Apt., Suwon-si Gyeonggi-do (KR); Bae, Dae-gyu, 708-101 Salgugol 7-danji Apt., Suwon-si Gyeonggi-do (KR); Sung, Hyun-ah, 104-201 Doosan Apt., Seoul (KR)
(74) Representative: Robinson, Ian Michael

(56) References cited:
- EP-A- 1 484 868
- EP-A- 1 650 913
- WO-A-20/04103009
- WO-A-20/05088915
- US-A1- 2003 152 059
- "Wireless universal serial bus specification passage" WIRELESS UNIVERSAL SERIAL BUS SPECIFICATION, XX, XX, no. revision 10, 12 May 2005 (2005-05-12), pages i-viii,1, XP002333868

## Description

Methods consistent with the present invention relate to wireless universal serial bus (WUSB) communication, and more particularly, to a method of allocating a channel time period for peer-to-peer communication between devices in WUSB communication, and to peer-to-peer communication using the method.

WUSB communication is a type of wireless communication performed between a WUSB host and a plurality of WUSB devices.

A WUSB host broadcasts a host message to WUSB devices, thereby allocating channel time periods to the WUSB devices so that the WUSB devices can communicate with the WUSB host during the respective channel time periods. The WUSB host communicates with the WUSB devices by managing the inputting and outputting of WUSB data using a microscheduled management command (MMC) contained in the host message that it has broadcast to the WUSB devices. The WUSB devices are allowed to transmit data to or receive data from the WUSB host only during the respective channel time periods allocated by the WUSB host.

A conventional method of allocating a channel time period in WUSB communication simply enables communication between a WUSB host and WUSB devices. For example, assuming that a personal computer (PC) serves as a WUSB host and a television (TV), a printer, a digital camera, and a camcorder are connected to the PC as WUSB devices, the TV, the printer, the digital camera, and the camcorder cannot communicate with one another but can communicate with the PC. In this WUSB communication group, the digital camera cannot output photos directly to the printer, or the camcorder cannot output image data directly to the TV without the aid of the PC. Therefore, photos or image data stored in the digital camera or the camcorder must be transmitted to the PC and then must be displayed or reproduced by the printer or the TV, which is inconvenient.

According to the present invention there is provided an apparatus and method as set forth in the appended claims. Preferred features of the invention will be apparent from the dependent claims, and the description which follows.

EP-A-1 484 868 relates to an apparatus and method enabling transmission and reception of data between wireless network devices in an ad-hoc network-based piconet without a piconet coordinator (PNC). A virtual piconet is generated using a beacon so that a device lacking a PNC function can perform a virtual PNC function.

US-A-2003/0152059 discloses a system and method for handling asynchronous data in a wireless network. The available transmission time is divided into a plurality of superframes, each of which is further divided up into a beacon duration, one or more management time slots, one or more guaranteed time slots, and one or more asynchronous time slots. Each of the time slots are assigned to one of the one or more remote devices.

The present invention provides a method of allocating a channel time period for peer-to-peer communication between devices in WUSB communication and a peer-to-peer communication method using the same.

According to an aspect of the present invention, there is provided a method of allocating a channel time period for peer-to-peer communication between devices in WUSB communication. The method includes: receiving a peer-to-peer request message requesting peer-to-peer communication from a first device during a device notification time slot (DNTS); and allocating a channel time period for peer-to-peer communication to the first device by generating a device-to-device channel time allocator (CTA) in an MMC. The device-to-device CTA allocates a time slot for peer-to-peer communication.

The device-to-device CTA may include: an identifier of the first device; an identifier of a second device whom the first device desires to peer-to-peer communicate with; and peer-to-peer channel time information regarding the time slot for peer-to-peer communication.

The WUSB communication may be based on the WUSB 0.9 specification, and the peer-to-peer channel time information may include start time information indicating when to commence peer-to-peer communication of data.

The WUSB communication may be based on the WUSB 0.8 specification, and the peer-to-peer channel time information may also include duration information indicating the duration of the peer-to-peer communication of the data.

The reception may include using a device notification message which is defined as allowing the transmission of data from the first device to a host during the DNTS according to the WUSB specification.

The device notification message may include: a header field (rWUSBHeader) which comprises an identifier of the first device; a device notification type field (hType) which indicates that the device notification message is a message requesting peer-to-peer communication; and a notification specific value field which comprises an identifier of a second device whom the first device desires to communicate with and peer-to-peer channel time information regarding the time slot for peer-to-peer communication .

According to another aspect of the present invention, there is provided a method of performing peer-to-peer communication between devices in WUSB communication. The method includes: receiving a peer-to-peer request message requesting peer-to-peer communication from a first device during a DNTS; allocating a channel time period for peer-to-peer communication to the first device by generating a device-to-device CTA (WDDCTA) in an MMC, wherein the device-to-device CTA allocates a time slot for peer-to-peer communication; and performing peer-to-peer communication between the first and a second device during the allocated channel time period.

The above and other aspects of the present invention will become more apparent by describing in detail exemplary embodiments thereof with reference to the attached drawings in which:
Figure 1 is a diagram for explaining a time slot of a host message broadcast by a WUSB host according to an exemplary embodiment of the present invention;
Figure 2 is a flowchart for explaining a method of allocating a channel time period for peer-to-peer communication between devices in WUSB communication according to an exemplary embodiment of the present invention;
Figure 3 is a diagram for explaining the format of a typical WUSB device notification message;
Figure 4 is a diagram for explaining the format of a peer-to-peer request message according to an exemplary embodiment of the present invention;
Figure 5 is a diagram for explaining the format of a typical CTA;
Figure 6 is a diagram for explaining the format of a CTA between devices according to an exemplary embodiment of the present invention; and
Figure 7 is a flowchart for explaining a peer-to-peer communication method according to an exemplary embodiment of the present invention.

The present invention will now be described more fully with reference to the accompanying drawings in which exemplary embodiments of the invention are shown.

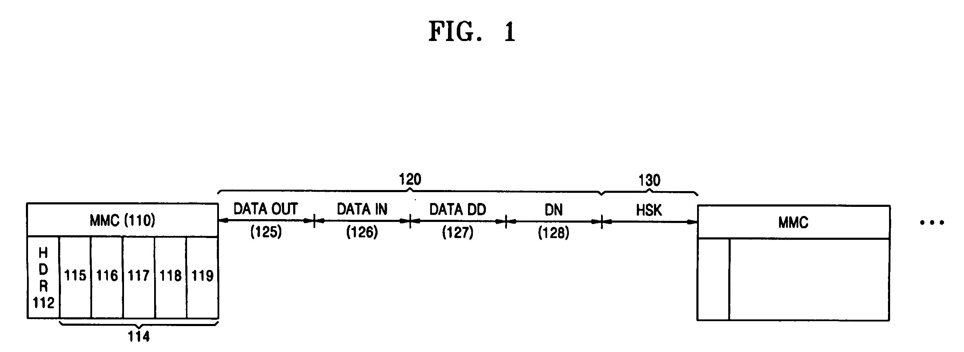

Figure 1 is a diagram for explaining a time slot of a host message broadcast by an WUSB host according to an exemplary embodiment of the present invention. The WUSB host is a hardware device or a software program that serves as a host in WUSB communication, and a WUSB device is a hardware device or a software program in WUSB communication.

In WUSB communication, a WUSB host and a plurality of WUSB devices are not wired. Thus, the WUSB host broadcasts data or a message to each of the WUSB devices. Due to the characteristics of broadcasting, the data or the message sent by the WUSB host is receivable by all of the WUSB devices. However, the WUSB devices cannot determine whether the data or the message sent by the WUSB host is destined for them. In order to solve this problem, time slots are respectively allocated to the WUSB devices using MMCs, thereby specifying the destination and content of the data or the message sent by the WUSB host.

Referring to Figure 1, a message 100 broadcast by the WUSB host includes an MMC 110, data 120 to be transmitted, and a handshake 130 indicating that the transmission of the message 100 is complete.

The MMC 110 includes a header 112 and at least one information element (IE) 114. Examples of the IE 114 include a CTA and a host IE. The CTA contains information on the direction of the transmission of the data 120 to be transmitted, the destination of the data 120 to be transmitted, and the starting time of the transmission of the data 120 to be transmitted. The MMC 110 includes one or more CTAs, which designate different time slots and correspond to a plurality of data existing in their respective time slots.

The MMC 110 includes a device reception CTA 115 (WDRCTA), which contains information necessary for allocating a time slot for transmitting data from the WUSB host to a WUSB device, a device transmission CTA 116 (WDTCTA), which contains information necessary for allocating a time slot for transmitting data from a WUSB device to the WUSB host, a device notification CTA 118 (WDNTSCTA), which contains information necessary for allocating a time slot for transmitting a device notification message from a WUSB device to the WUSB host, and a handshake device transmission CTA 119 (WDTCTA_hsk), which contains information necessary for allotting a time slot for transmitting the handshake 130.

In an exemplary embodiment of the present invention, the MMC 110 also includes a device-to-device CTA 117 (WDDCTA), which contains information necessary for allocating a time slot for transmitting data between WUSB devices. In a time slot allocated using the device-to-device CTA 117, a first WUSB device issues a peer-to-peer communication request to a second WUSB device and broadcasts peer-to-peer data 127 to the second WUSB device, but the WUSB host and WUSB devices, other than the first and second WUSB devices, are not allowed to transmit data.

The MMC 110 may include all or some of the device reception CTA 115, the device transmission CTA 116, the device-to-device CTA 117, the device notification CTA 118, and the handshake device transmission CTA 119 depending on the purpose of data transmission.

Each of the CTAs 115 through 119 includes attribute information.

For example, the device reception CTA 115 includes channel time information regarding a time slot allocated for transmitting data from the WUSB host to one of a WUSB device and an identifier of the WUSB device to which the data is sent by the WUSB host. The device transmission CTA 116 includes channel time information regarding a time slot allocated for transmitting data from a WUSB device to the WUSB host and an identifier of the WUSB device that transmits data to the WUSB device. The device notification CTA 118 includes channel time information regarding a time slot allocated for transmitting a device notification message to the WUSB host. The handshake device transmission CTA 119 includes channel time information regarding a time slot allocated for transmitting the handshake 130.

The device-to-device CTA 117 includes an identifier of a first WUSB device that issues a peer-to-peer communication request, an identifier of a second WUSB device that receives the peer-to-peer communication request issued by the first WUSB device, and channel time information regarding a time slot allocated for peer-to-peer communication between the first and second WUSB devices.

A method of allocating a channel time period for peer-to-peer communication between devices in WUSB communication using WUSB CTAs according to an exemplary embodiment of the present invention will now be described in detail.

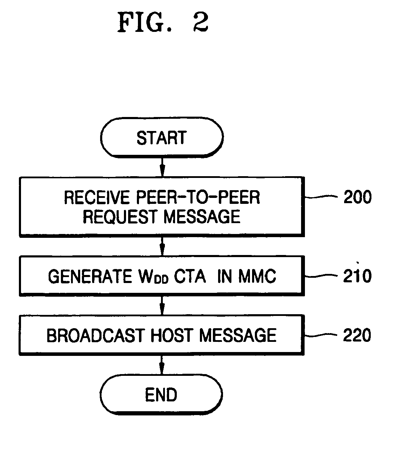

Figure 2 is a flowchart for explaining a method of allocating a channel time period for peer-to-peer communication between devices in WUSB communication according to an exemplary embodiment of the present invention that enables peer-to-peer communication between WUSB devices. In operation 200, a WUSB host receives a peer-to-peer request message from a first WUSB device during a device notification time slot (DNTS). The DNTS is a time slot during which the first WUSB device is allowed to transmit data to the WUSB host.

The first WUSB device obtains a device notification CTA (WDNTSCTA) from an MMC broadcast by the WUSB host and broadcasts a peer-to-peer request message to the WUSB host at a moment of time designated by the DNTS.

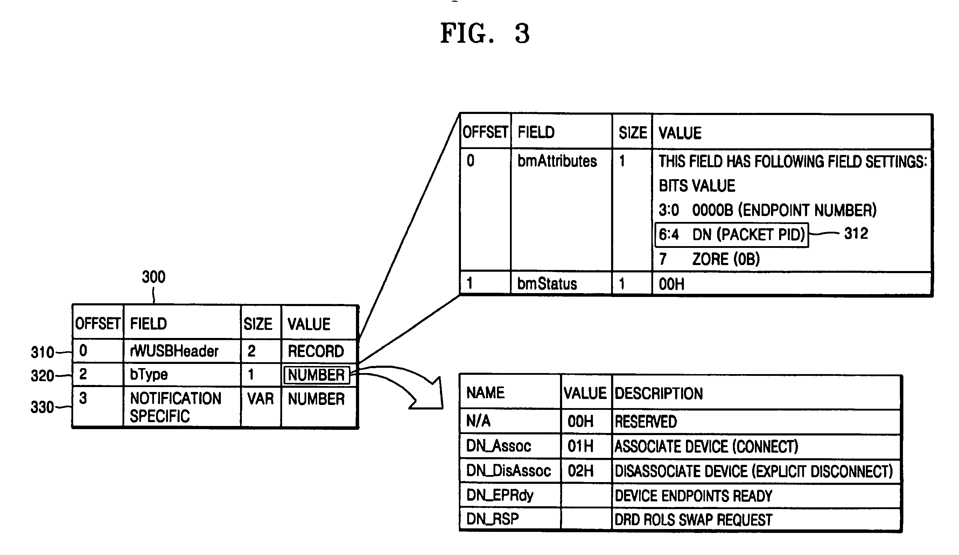

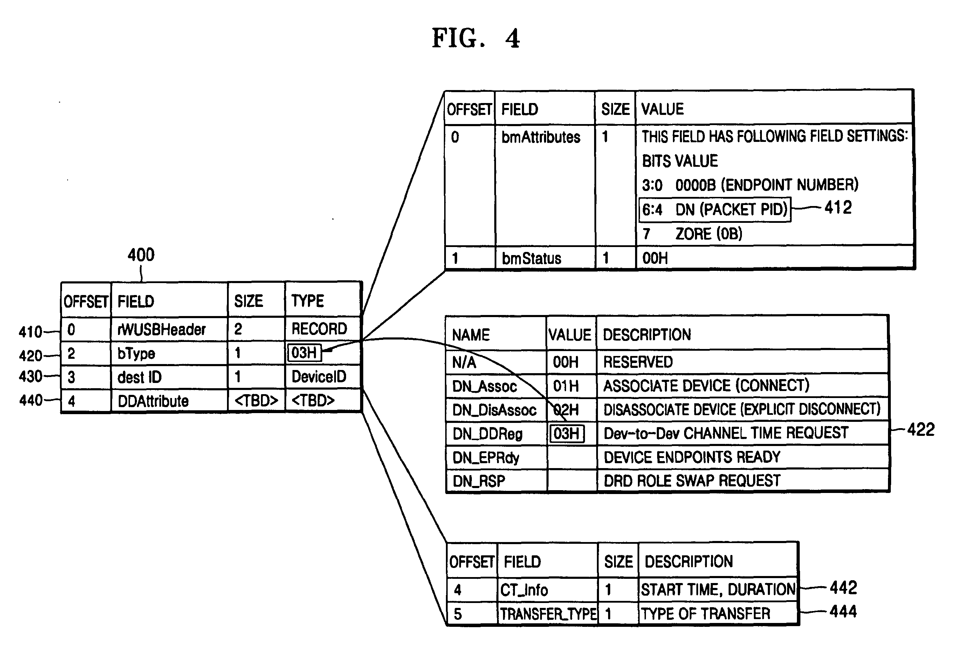

The peer-to-peer request message may be a variation of a device notification message, which will be described later in further detail with reference to Figures 3 and 4.

In operation 210, the WUSB host generates a device-to-device CTA (WDDCTA), which is used for allocating a time slot for peer-to-peer communication, in the MMC and allocates a channel time period to the first WUSB device.

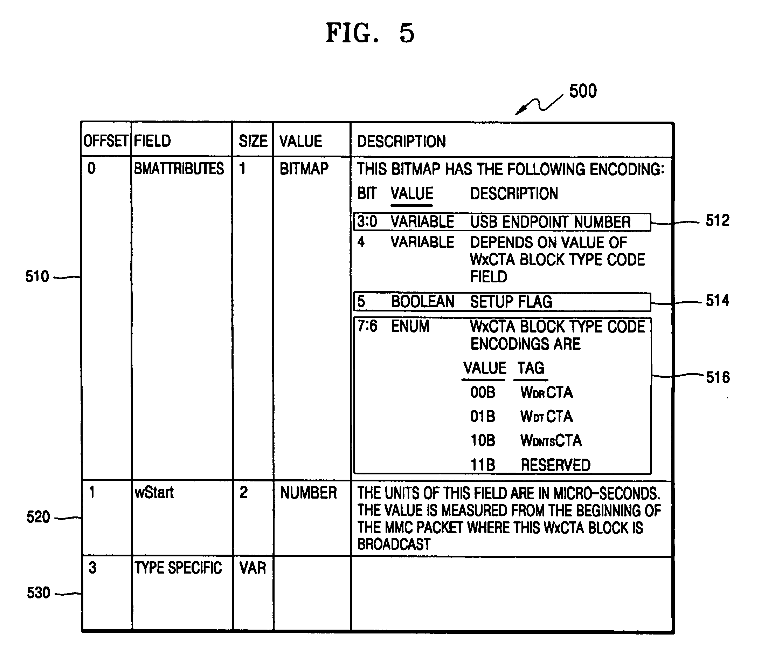

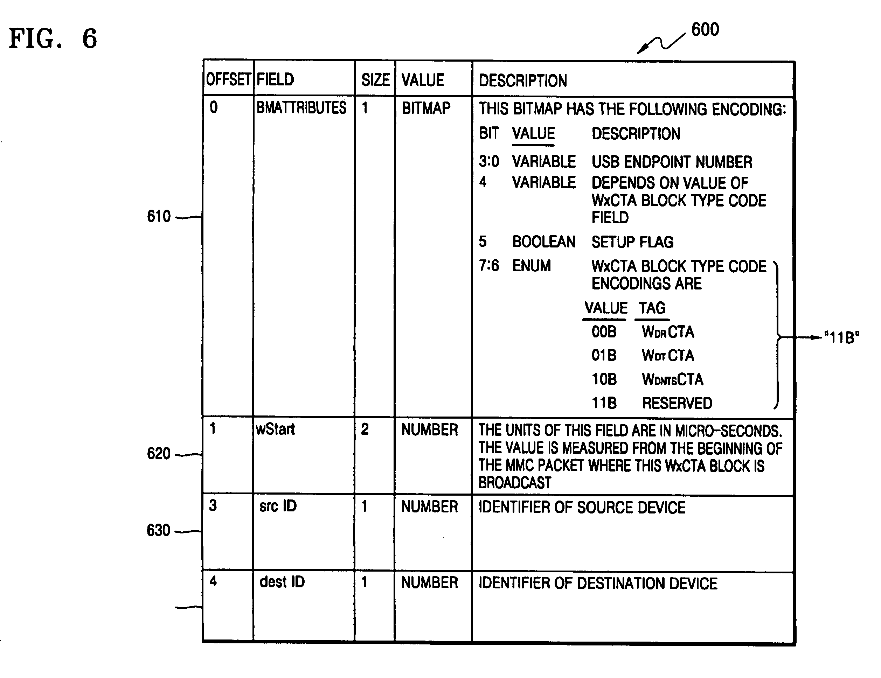

The device-to-device CTA includes an identifier of the first WUSB device, an identifier of a second WUSB device that the first WUSB device desires to communicate with, and channel time information regarding a time slot allocated for peer-to-peer communication between the first and second WUSB devices. The identifier of the first WUSB device, the identifier of the second WUSB device, and the channel time information regarding the time slot allocated for peer-to-peer communication between the first and second WUSB devices can be obtained from the peer-to-peer request message received by the WUSB host in operation 200. The format of the device-to-device CTA (WDDCTA) will be described later in further detail with reference to Figures 5 and 6.

In operation 220, the WUSB host broadcasts a host message containing the MMC generated in operation 210 and an allocated time slot corresponding to the MMC.

The first WUSB device receives the host message broadcast by the WUSB host, analyzes the MMC contained in the received host message, obtains channel time information regarding the time slot allocated by the WUSB host, and peer-to-peer-communicates with the second WUSB device during the allocated time slot.

Figure 3 is a diagram for explaining the format of a typical WUSB device notification message. A first WUSB device transmits a peer-to-peer request message to a WUSB host in a DNTS designated by the WUSB host. The peer-to-peer request message may be realized by modifying part of a typical WUSB device notification message. The format of the typical WUSB device notification message will now be described in detail with reference to Figure 3.

A device notification message 300 includes a header field 310 (rWUSBHeader), a recognition type field 320 (bType), and a notification-specific value field 330 (Notification specific).

The header field 310 is a field indicating that the corresponding message is a device notification message. The offset of the header field 310 begins from a value of 0, and the header field 310 has a size of two bytes. The header field 310 includes a device identifier 312 of a device sending the device notification message 300.

The recognition type field 320 specifies the type of recognition desired by the device sending the device notification message 300. The offset of the recognition type field 320 begins from a value of 2, and the recognition type field 320 has a size of one byte. There are two types of notification, i.e., association, which is performed by a device to participate in WUSB communication carried out by a host receiving the device notification message 300, and disassociation, which is performed by a device to terminate communication with the host receiving the device notification message 300.

The notification-specific value field 330 is a field used for allocating various specific values needed for the type of recognition specified in the recognition type field 320. The offset of the notification-specific value field 330 begins from a value of 3, and the notification-specific value field 330 has a variable length.

Figure 4 is a diagram for explaining the format of a peer-to-peer request message 400 according to an exemplary embodiment of the present invention. The peer-to-peer request message 400 can be realized by modifying part of the device notification message 300, as described above with reference to Figure 2.

The peer-to-peer request message 400 includes a header field 410, a notification type field 420, a peer-to-peer destination field 430 (destID), and a peer-to-peer attribute value field 440 (DDAttribute).

The header field 410 has the same format as the header field 310 of Figure 3. A device sending a device notification message requests peer-to-peer communication, and thus, a bit value 412 included in the head field 410 specifies the device requesting peer-to-peer communication.

The notification type field 420 comprises a bit value 03H indicating that notification requested by the peer-to-peer request message 400 is device-to-device communication notification 422 (DN_DDReq). In the present exemplary embodiment, the device-to-device communication notification 422 is defined as a new type of notification for WUSB communication.

The peer-to-peer destination field 430 and the peer-to-peer attribute value field 440 both correspond to the notification specific value field 330 of Figure 3.

The peer-to-peer destination field 430 stores an identifier of a destination of peer-to-peer communication. Therefore, an identifier of a first device transmitting the peer-to-peer request message 400 is recorded in the header field 410, and an identifier of a second device receiving the peer-to-peer request message 400 is recorded in the peer-to-peer destination field 430.

The peer-to-peer attribute value field 440 stores various attribute values needed to carry out peer-to-peer communication, e.g., peer-to-peer channel time information 442 (CT_Info) and peer-to-peer transmission type information 444 (Transfer_Type).

The peer-to-peer channel time information 442 specifies a time slot on a time axis allotted for peer-to-peer communication between the first device and the second device. Information contained in the peer-to-peer channel time information 442 may vary according to the version of WUSB applied to the present invention. For example, if the WUSB applied to the present invention is WUSB 0.8, the peer-to-peer channel time information 442 may comprise a start time (Start Time) of the time slot allotted for peer-to-peer communication between the first and second devices, and the duration of the time slot as illustrated in Figure 4. If the WUSB applied to the present invention is WUSB 0.9, the peer-to-peer channel time information 442 may only comprise the start time of the time slot because, according to WUSB 0.9, the start time of a time slot is defined by a current MMC, and the end time of the time slot is obtained by analyzing a subsequent MMC.

The peer-to-peer transmission type information 444 specifies the type of communication which is chosen for peer-to-peer communication between the first and second devices according to the types of the first and second devices. The WUSB specification defines 4 communication types, i.e., control communication Control, interrupt communication Interrupt, bulk communication Bulk, and isochronous communication Isochronous. Each of the communication types Control, Interrupt, Bulk, and Isochronous corresponds to flow control in a transmission layer. Detailed descriptions of the communication types Control, Interrupt, Bulk, and Isochronous are presented in the WUSB specification. One of the communication types Control, Interrupt, Bulk, and Isochronous may be chosen according to the purpose of communication, and particularly, according to the characteristics of an application. For example, if it is not much critical when a data receiver receives data as in transmission of images from a digital camera to a printer device, the communication type Bulk may be chosen. On the other hand, if it is important when a data receiver receives data as in transmission of moving image data in real time, the communication type Isochronous may be chosen.

Figure 5 is a diagram for explaining the format of a typical CTA 500. In the present exemplary embodiment, a device-to-device CTA is defined as a new CTA. The format of the channel allocator 500 will now be described with reference to the WUSB 0.9 specification.

The channel allocator 500 includes an attribute field 510 (BMAttributes), a start time field 520 (wStart), and a type specific value field 530 (Type specific).

The attribute field 510 stores attribute values that typical CTAs including the CTA 500 have in common. The attribute values stored in the attribute field 510 may include a USB endpoint number 512 (USB Endpoint Number), a setup flag 514 (Setup Flag), and type code 516. The type code 516 is a bit value specifying the type of the CTA 500. According to the WUSB 0.9 specification, if the type code 516 is set to 00B, it indicates that the CTA 500 is a device reception CTA (WDRCTA). If the type code 516 is set to 01B, it indicates that the CTA 500 is a device transmission CTA (WDTCTA). If the type code 516 is set to 10B, it indicates that the CTA 500 is a device notification CTA ((WDNTSCTA). If the type code 516 is set to 11B, it is yet to be defined, i.e., it is reserved.

A start time of a time slot allotted by the CTA 500 is recorded in the start time field 520.

The type specific value field 530 stores type-specific values needed by the CTA 500 whose type is specified by the type code 516.

Figure 6 is a diagram for explaining the format of a device-to-device CTA 600 (WDDCTA) according to an exemplary embodiment of the present invention. Referring to FIG. 6, the device-to-device CTA 600 is a newly defined CTA obtained by applying the present invention to the existing WUSB specification and is included in an MMC as an information element. The format of the device-to-device CTA 600 may be obtained by modifying the format of the CTA 500 of Figure 5.

Referring to Figure 6, the device-to-device CTA 600 includes an attribute field 610, a start time field 620, a source device field 630, and a destination device field 640.

The attribute field 610 stores the same information as the attribute field 510 of Figure 5 except that type code of the attribute field 610, unlike the type code 516 of FIG. 5, is defined even when it is set to 11B. If the type code of the attribute field 610 is set to 11B, it indicates that the corresponding CTA is a device-to-device CTA. A bit value of 0 is recorded in all fields of the attribute field 610 except the type code.

A start time of a time slot allotted by the device-to-device CTA 600 is recorded in the start time field 620. Therefore, the start time field 620 indicates when to commence peer-to-peer communication. According to the WUSB 0.9 specification, the end time of a time slot allotted by a CTA can be obtained by analyzing an MMC following an MMC containing the CTA.

Alternatively, the start time specified in the start time field 620 is not the beginning of a time slot requested by a first device using a device notification message but the beginning of a time slot determined by a host. Therefore, if the time slot requested by the first device is not free, the host may arbitrarily choose one of free time slots for peer-to-peer communication by specifying a time slot start time or specifying both a time slot start time and a time slot duration.

Alternatively, in a case where the present invention is applied to the WUSB 0.8 specification, the device-to-device CTA 600 may additionally include a transmission duration field specifying the duration of the time slot allotted by the device-to-device CTA 600 as well as the start time field 620 because the WUSB 0.8 specification states that a channel time period allocated by a CTA is specified by two pieces of information, i.e., a start time and duration.

The source device field 630 and the destination device field 640 correspond to the type specific value field 530 of Figure 5. An identifier of a source device requesting peer-to-peer communication, i.e., an identifier of the first device, is recorded in the source device field 630. An identifier of a destination device with whom the first device would like to peer-to-peer communicate, i.e., an identifier of a second device, is recorded in the destination device field 640.

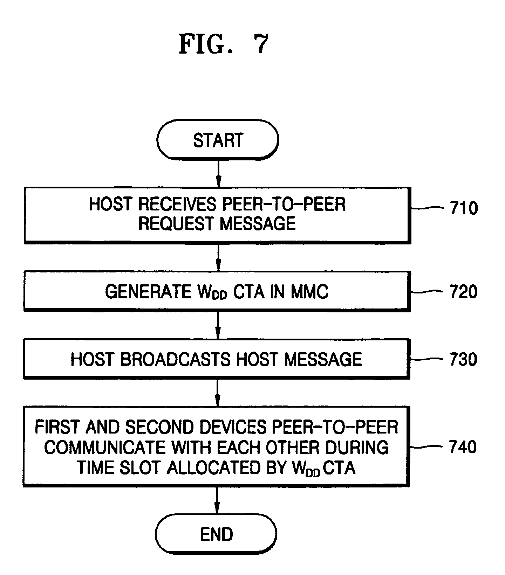

Figure 7 is a flowchart for explaining a peer-to-peer communication method according to an exemplary embodiment of the present invention. Referring to Figure 7, in operation 710, a host receives a peer-to-peer request message from a first device during a DNTS.

The DNTS is a time slot allocated for allowing the transmission of data by the shot according to the WUSB specification.

The first device obtains a device notification CTA (WDNTSCTA) from an MMC broadcast by the host, obtains the DNTS from the device notification CTA, and broadcasts the peer-to-peer request message at a start time of the DNTS.

In operation 720, the host generates a device-to-device CTA (WDDCTA) in an MMC, thereby allocating a time slot for peer-to-peer communication to the first device.

In operation 730, the host broadcasts a host message including the MMC generated in operation 720 and the time slot for peer-to-peer communication allocated in operation 720.

In operation 740, the first device receives the host message from the host and obtains the time slot for peer-to-peer communication by analyzing the MMC contained in the host message, and performs peer-to-peer communication with a second device during the time slot for peer-to-peer communication .

Once the time slot for peer-to-peer communication is allocated for the first and second devices, the first and second devices may peer-to-peer communicate with each other in various manners, for example, in the following two methods. The first method is a WUSB communication method in which the first device may serve as a WUSB host and the second device may serve as a WUSB device. In detail, the first device generates a sub-transaction group exclusively used for the second device during a time slot corresponding to peer-to-peer channel time information obtained in operation 740, i.e., during the time slot for peer-to-peer communication, and broadcasts the time slot for peer-to-peer communication. Then, the second device recognizes the first device as a host during the time slot for peer-to-peer communication. The sub-transaction group is a subgroup of a transaction group consisting of MMCs and data and comprises MMCs and data. The sub-transaction group has a format defined in the WUSB specification.

The second method is a poll-based communication method using tokens. In detail, the first device broadcasts a token to the second device during the time slot for peer-to-peer communication, and the second device transmits data to or receives data from the first device in a predetermined period of time specified by the token. This poll-based communication method is obvious to one of ordinary skill in the art. The token broadcast by the first device is generated by the first device and may be classified into an in-token for allowing the transmission of data from the second device to the first device or an out-token for allowing the transmission of data from the first device to the second device.

The channel time allocation method according to the present invention can be realized as computer-readable code written on a computer-readable recording medium. The computer-readable recording medium may be any type of recording device in which data is stored in a computer-readable manner. Examples of the computer-readable recording medium include a read-only memory ROM, a random access memory (RAM), a compact disc (CD)-ROM, a magnetic tape, a floppy disc, an optical data storage, and a carrier wave (e.g., data transmission through the Internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to enable devices belonging to a WUSB communication group to peer-to-peer communicate with one another using the existing WUSB specification.

Although a few preferred embodiments have been shown and described, it will be appreciated by those skilled in the art that various changes and modifications might be made without departing from the scope of the invention, as defined in the appended claims.

## Claims

1. A method of allocating a channel time period for peer-to-peer communication between devices in wireless universal serial bus WUSB communication, the method **characterised by**:
receiving a peer-to-peer request message (400) requesting peer-to-peer communication from a first device during a device notification time slot DNTS; and
allocating a channel time period for the peer-to-peer communication to the first device by generating a device-to-device channel time allocator CTA (600) in a microscheduled management command,
wherein the device-to-device CTA (600) allocates a time slot for the peer-to-peer communication.

2. The method of claim 1, wherein the device-to-device CTA (600) comprises:
an identifier (633) of the first device;
an identifier (640) of a second device which the first device desires to peer-to-peer communicate with; and
peer-to-peer channel time information (620) regarding the time slot for the peer-to-peer communication.

3. The method of claim 2, wherein the WUSB communication is based on the WUSB 0.9 specification, and the peer-to-peer channel time information (620) comprises start time information indicating when to commence the peer-to-peer communication of data.

4. The method of claim 3, wherein the WUSB communication is based on the WUSB 0.8 specification, and the peer-to-peer channel time information (620) further comprises duration information indicating the duration of the peer-to-peer communication of the data.

5. The method of any preceding claim, wherein the peer-to-peer request message (400) comprises:
an identifier (410) of the first device; and
an identifier (430) of a second device which the first device desires to peer-to-peer communicate with.

6. The method of any preceding claim, wherein the peer-to-peer request message (400) comprises transmission type information (425) specifying a type of data transmission between devices.

7. The method of claim 6, wherein the type of the data transmission is one of control transmission, interrupt transmission, bulk transmission, and isochronous transmission.

8. The method of any preceding claim, wherein the receiving step comprises using a device notification message (400) which is defined as allowing the transmission of data from the first device to a host during the DNTS according to a WUSB specification.

9. The method of claim 8, wherein the device notification message (400) comprises:
a header field (410) which comprises an identifier (412) of the first device;
a device notification type field (420) which indicates that the device notification message (400) is a message requesting the peer-to-peer communication; and
a notification specific value field (430, 440) which comprises an identifier (430) of a second device whom the first device desires to communicate with and peer-to-peer channel time information (442) regarding the time slot for the peer-to-peer communication.

10. The method of any preceding claim, further comprising:
performing the peer-to-peer communication between the first device and a second device during the channel time period which is allocated.

11. The method of claim 10, wherein the performing step comprises the first device serving as a WUSB host and the second device serving as a WUSB device.

12. The method of claim 11, wherein the performing step comprises generating a transaction group for transmitting data from the first device to the second device during the channel time period which is allocated.

13. The method of claim 10, 11 or 12, wherein the performing step comprises using a poll-based communication method using a token, wherein the token is a message generated by the first device for allowing communication with the first device.

14. The method of claim 13, wherein the performing step comprises:
broadcasting an in-token comprising a predetermined time slot designated by the first device, wherein the predetermined time slot comprises a time period during which the transmission of data to the first device is allowed; and
receiving the in-token and transmitting data to the first device during the predetermined time slot by the second device.

15. The method of claim 14, wherein the performing step comprises:
broadcasting an out-token comprising a predetermined time slot designated by the first device, wherein the predetermined time slot comprises a time period during which the transmission of data to the second device is allowed; and
receiving the out-token and receiving data from the first device during the predetermined time slot by the second device.

16. A computer-readable recording medium storing a computer program for executing a method of allocating a channel time period for peer-to-peer communication between devices in wireless universal serial bus WUSB communication, the method comprising:
receiving a peer-to-peer request message (400) requesting peer-to-peer communication from a first device during a device notification time slot DNTS ; and
allocating a channel time period for the peer-to-peer communication to the first device by generating a device-to-device channel time allocator CTA (600) in a microscheduled management command,
wherein the device-to-device CTA (600) allocates a time slot for the peer-to-peer communication.

17. A computer-readable recording medium storing a computer program for executing a method of performing peer-to-peer communication between devices in wireless universal serial bus WUSB communication, where the method is as set forth in any of claims 2 to 15.

## Patentansprüche

1. Verfahren zum Zuweisen eines Kanal-Zeitraums für Peer-to-Peer-Kommunikation zwischen Vorrichtungen, die in WUSB (wireless universal serial bus)-Verbindung stehen, wobei das Verfahren **gekennzeichnet ist durch**:
Empfangen einer Peer-to-Peer-Anforderungsnachricht (400), die Peer-to-Peer-Kommunikation anfordert, von einer ersten Vorrichtung während eines Vorrichtungsbenachrichtigungs-Zeitschlitzes (device notification time slot - DNTS); und
Zuweisen eines Kanal-Zeitraums für die Peer-to-Peer-Kommunikation zu der ersten Vorrichtung **durch** Erzeugen eines Vorrichtung-zu-Vorrichtung-Kanalzeit-Zuweisungselementes (device-to-device channel time allocator - CTA) (600) in einem Mikrozeitplan-Verwaltungsbefehl (microscheduled management command),
wobei das Vorrichtung-zu-Vorrichtung-CTA (600) einen Zeitschlitz für die Peer-to-Peer-Kommunikation zuweist.

2. Verfahren nach Anspruch 1, wobei das Vorrichtung-zu-Vorrichtung-CTA (600) umfasst:
eine Kennung (633) der ersten Vorrichtung;
eine Kennung (640) einer zweiten Vorrichtung, mit der die erste Vorrichtung in Peer-to-Peer-Kommunikation treten möchte; und
Peer-to-Peer-Kanalzeit-Informationen (620) bezüglich des Zeitschlitzes für die Peer-to-Peer-Kommunikation.

3. Verfahren nach Anspruch 2, wobei die WUSB-Kommunikation auf der Spezifikation WUSB 0.9 basiert und die Peer-to-Peer-Kanalzeitinformationen (620) Startzeitinformationen umfassen, die anzeigen, wann mit der Peer-to-Peer-Kommunikation von Daten begonnen wird.

4. Verfahren nach Anspruch 3, wobei die WUSB-Kommunikation auf der Spezifikation WUSB 0.8 basiert und die Peer-to-Peer-Kanalzeitinformationen (620) des Weiteren Zeitdauer-Informationen umfassen, die die Zeitdauer der Peer-to-Peer-Kommunikation der Daten anzeigen.

5. Verfahren nach einem der vorangehenden Ansprüche, wobei die Peer-to-Peer-Anforderungsnachricht (400) umfasst:
eine Kennung (410) der ersten Vorrichtung; und
eine Kennung (430) einer zweiten Vorrichtung, mit der die erste Vorrichtung in Peer-to-Peer-Kommunikation treten möchte.

6. Verfahren nach einem der vorangehenden Ansprüche, wobei die Peer-to-Peer-Anforderungsnachricht (400) Sendetyp-Informationen (425) umfasst, die einen Typ des Sendens von Daten zwischen Vorrichtungen spezifizieren.

7. Verfahren nach Anspruch 6, wobei der Typ des Sendens von Daten Steuer-Senden, Interrupt-Senden, Massen-Senden oder isochrones Senden ist.

8. Verfahren nach einem der vorangehenden Ansprüche, wobei der Schritt des Empfangens Verwenden einer Vorrichtungs-Mitteilungsnachricht (400) umfasst, die so definiert ist, dass sie das Senden von Daten von der ersten Vorrichtung zu einem Host während des DNTS entsprechend einer WUSB-Spezifikation zulässt.

9. Verfahren nach Anspruch 8, wobei die Vorrichtungs-Mitteilungsnachricht (400) umfasst:
ein Header-Feld (410), das eine Kennung (412) der ersten Vorrichtung umfasst;
ein Vorrichtungs-Mitteilungstyp-Feld (420), das anzeigt, dass die Vorrichtungs-Mitteilungsnachricht (400) eine Nachricht ist, die die Peer-to-Peer-Kommunikation anfordert; und
ein Feld (430, 440) des spezifischen Wertes der Mitteilung, das eine Kennung (430) einer zweiten Vorrichtung, mit der die erste Vorrichtung kommunizieren möchte, und Peer-to-Peer-Kanalzeit-Informationen (442) bezüglich des Zeitschlitzes für die Peer-to-Peer-Kommunikation umfasst.

10. Verfahren nach einem der vorangehenden Ansprüche, das des Weiteren umfasst:
Durchführen der Peer-to-Peer-Kommunikation zwischen der ersten Vorrichtung und einer zweiten Vorrichtung während des Kanalzeitraums, der zugewiesen wird.

11. Verfahren nach Anspruch 10, wobei der Schritt des Durchführens umfasst, dass die erste Vorrichtung als ein WUSB-Host dient und die zweite Vorrichtung als eine WUSB-Vorrichtung dient.

12. Verfahren nach Anspruch 11, wobei der Schritt des Durchführens Erzeugen einer Transaktionsgruppe zum Senden von Daten von der ersten Vorrichtung zu der zweiten Vorrichtung während des Kanalzeitraums umfasst, der zugewiesen wird.

13. Verfahren nach Anspruch 10, 11 oder 12, wobei der Schritt des Durchführens Verwenden eines abfragebasierten Kommunikationsverfahrens unter Verwendung eines Token umfasst, wobei der Token eine durch die erste Vorrichtung erzeugte Nachricht ist, die Kommunikation mit der ersten Vorrichtung zulässt.

14. Verfahren nach Anspruch 13, wobei der Schritt des Durchführens umfasst:
Rundsenden eines Eingangs-Token, der einen durch die erste Vorrichtung angegebenen vorgegebenen Zeitschlitz umfasst, wobei der vorgegebene Zeitschlitz einen Zeitraum umfasst, in dem das Senden von Daten zu der ersten Vorrichtung zugelassen wird; und
Empfangen des Eingangs-Token und Senden von Daten zu der ersten Vorrichtung während des vorgegebenen Zeitschlitzes durch die zweite Vorrichtung.

15. Verfahren nach Anspruch 14, wobei der Schritt des Durchführens umfasst:
Rundsenden eines Ausgangs-Token, der einen durch die erste Vorrichtung angegebenen vorgegebenen Zeitschlitz umfasst, wobei der vorgegebene Zeitschlitz einen Zeitraum umfasst, in dem das Senden von Daten zu der zweiten Vorrichtung zugelassen wird; und
Empfangen des Ausgangs-Token und Empfangen von Daten von der ersten Vorrichtung während des vorgegebenen Zeitschlitzes durch die zweite Vorrichtung.

16. Computerlesbares Medium, das ein Computerprogramm zum Ausführen eines Verfahrens zum Zuweisen eines Kanals-Zeitraums für Peer-to-Peer-Kommunikation zwischen Vorrichtungen in WUSB (wireless universal serial bus)-Kommunikation speichert,
wobei das Verfahren umfasst:
Empfangen einer Peer-to-Peer-Anforderungsnachricht (400), die Peer-to-Peer-Kommunikation anfordert, von einer ersten Vorrichtung während eines VorrichtungsBenachrichtigungs-Zeitschlitzes (device notification time slot - DNTS); und
Zuweisen eines Kanal-Zeitraums für die Peer-to-Peer-Kommunikation zu der ersten Vorrichtung durch Erzeugen eines Vorrichtung-zu-Vorrichtung-Kanalzeit-Zuweisungselementes (device-to-device channel time allocator - CTA) (600) in einem Mikrozeitplan-Verwaltungsbefehl (microscheduled management command), wobei das Vorrichtung-zu-Vorrichtung-CTA (600) einen Zeitschlitz für die Peer-to-Peer-Kommunikation zuweist.

17. Computerlesbares Speichermedium, das ein Computerprogramm zum Ausführen eines Verfahrens zum Durchführen von Peer-to-Peer-Kommunikation zwischen Vorrichtungen in WUSB-Kommunikation speichert, wobei das Verfahren ein einem der Ansprüche 2 bis 15 dargestellt ist.

## Revendications

1. Procédé pour allouer une période de temps sur un canal pour une communication point à point entre des dispositifs impliqués dans une communication par bus série universel sans fil, WUSB, le procédé étant **caractérisé par** les étapes consistant à :
recevoir un message de demande point à point (400) demandant une communication point à point d'un premier dispositif au cours d'une tranche de temps de notification de dispositif, DNTS ; et
allouer une période de temps sur un canal pour la communication point à point au premier dispositif en générant un module d'affectation de temps de canal de dispositif à dispositif, CTA, (600) dans une commande de gestion micro-programmée,
dans lequel le module d'affectation de temps sur un canal de dispositif à dispositif, CTA, (600) alloue une tranche de temps pour la communication point à point.

2. Procédé selon la revendication 1, dans lequel le module d'affectation de temps sur un canal de dispositif à dispositif, CTA, (600) comporte :
un identifiant (633) du premier dispositif ;
un identifiant (640) d'un second dispositif avec lequel le premier dispositif désire communiquer en mode point à point ; et
des informations de temps de canal de point à point (620) concernant la tranche de temps pour la communication point à point.

3. Procédé selon la revendication 2, dans lequel la communication par bus série universel sans fil, WUSB, est basée sur la spécification WUSB 0.9, et dans lequel les informations de temps de canal de point à point (620) comportent des informations de temps de début indiquant le moment où commencer la communication point à point de données.

4. Procédé selon la revendication 3, dans lequel la communication par bus série universel sans fil, WUSB, est basée sur la spécification WUSB 0.8, et dans lequel les informations de temps de canal de point à point (620) comportent en outre des informations de durée indiquant la durée de la communication point à point des données.

5. Procédé selon l'une quelconque des revendications précédentes, dans lequel le message de demande point à point (400) comporte :
un identifiant (410) du premier dispositif ; et
un identifiant (430) d'un second dispositif avec lequel le premier dispositif désire communiquer en mode point à point.

6. Procédé selon l'une quelconque des revendications précédentes, dans lequel le message de demande point à point (400) comporte des informations de type de transmission (425) spécifiant un type de transmission de données entre les dispositifs.

7. Procédé selon la revendication 6, dans lequel le type de la transmission de données est l'un parmi une transmission de commande, une transmission d'interruption, une transmission en volume, et une transmission isochrone.

8. Procédé selon l'une quelconque des revendications précédentes, dans lequel l'étape de réception comporte l'étape consistant à utiliser un message de notification de dispositif (400) qui est défini en tant que permettant la transmission de données du premier dispositif à un hôte au cours de la tranche de temps de notification de dispositif, DNTS, selon une spécification WUSB.

9. Procédé selon la revendication 8, dans lequel le message de notification de dispositif (400) comporte :
un champ d'en-tête (410) qui comporte un identifiant (412) du premier dispositif ;
un champ de type de notification de dispositif (420) qui indique que le message de notification de dispositif (400) est un message demandant la communication point à point ; et
un champ de valeur spécifique à une notification (430, 440) qui comporte un identifiant (430) d'un second dispositif avec lequel le premier dispositif désire communiquer et des informations de temps de canal de point à point (442) concernant la tranche de temps pour la communication point à point.

10. Procédé selon l'une quelconque des revendications précédentes, comportant en outre l'étape consistant à :
exécuter la communication point à point entre le premier dispositif et un second dispositif au cours de la période de temps sur un canal qui est allouée.

11. Procédé selon la revendication 10, dans lequel l'étape d'exécution comporte l'étape dans laquelle le dispositif présente une fonction d'hôte WUSB et le second dispositif présente une fonction de dispositif WUSB.

12. Procédé selon la revendication 11, dans lequel l'étape d'exécution comporte l'étape consistant à générer un groupe de transaction pour transmettre des données du premier dispositif au second dispositif au cours de la période de temps sur un canal qui est allouée.

13. Procédé selon la revendication 10, 11 ou 12, dans lequel l'étape d'exécution comporte l'étape consistant à utiliser un procédé de communication basé sur une invitation à émettre utilisant un jeton, dans lequel le jeton est un message généré par le premier dispositif pour permettre la communication avec le premier dispositif.

14. Procédé selon la revendication 13, dans lequel l'étape d'exécution comporte les étapes consistant à :
diffuser un jeton d'entrée comportant une tranche de temps prédéterminée désignée par le premier dispositif, dans lequel la tranche de temps prédéterminée comporte une période de temps au cours de laquelle la transmission de données au premier dispositif est permise ; et
recevoir le jeton d'entrée et transmettre des données au premier dispositif au cours de la tranche de temps prédéterminée au moyen du second dispositif.

15. Procédé selon la revendication 14, dans lequel l'étape d'exécution comporte l'étape consistant à :
diffuser un jeton de sortie comportant une tranche de temps prédéterminée désignée par le premier dispositif, dans lequel la tranche de temps prédéterminée comporte une période de temps au cours de laquelle la transmission de données au second dispositif est permise ; et
recevoir le jeton de sortie et recevoir des données du premier dispositif au cours de la tranche de temps prédéterminée au moyen du second dispositif.

16. Support d'enregistrement lisible par un ordinateur stockant un programme informatique pour exécuter un procédé destiné à allouer une période de temps sur un canal pour une communication point à point entre des dispositifs en communication par bus série universel sans fil, WUSB, le procédé comportant les étapes consistant à :
recevoir un message de demande point à point (400) demandant une communication point à point d'un premier dispositif au cours d'une tranche de temps de notification de dispositif, DNTS ; et
allouer une période de temps sur un canal pour la communication point à point au premier dispositif en générant un module d'affectation de temps de canal de dispositif à dispositif, CTA, (600) dans une commande de gestion micro-programmée,
le module d'affectation de temps de canal de dispositif à dispositif, CTA, (600) affectant une tranche de temps pour la communication point à point.

17. Support d'enregistrement lisible par un ordinateur stockant un programme informatique pour exécuter un procédé destiné à mettre en oeuvre une communication point à point entre des dispositifs en communication par bus série universel sans fil, WUSB, le procédé étant selon les revendications 2 à 15.
